# EUROPÄISCHE PATENTSCHRIFT

(11) **EP 3 758 978 B1**
(45) Veröffentlichungstag und Bekanntmachung des Hinweises auf die Patenterteilung: **08.04.2026**
(21) Anmeldenummer: 19708988.1
(22) Anmeldetag: 27.02.2019
(51) Int. Cl.: B60L 53/35, B60L 53/14, B25J 9/16

(54) **GREIFVORRICHTUNG FÜR EIN OBJEKT, LADEROBOTER MIT GREIFVORRICHTUNG**
GRIPPER DEVICE FOR AN OBJECT, CHARGING ROBOT HAVING A GRIPPER DEVICE
DISPOSITIF DE PRÉHENSION POUR UN OBJET, ROBOT DE CHARGEMENT À DISPOSITIF DE PRÉHENSION

(30) Priorität: 01.03.2018 DE 102018104670
(43) Veröffentlichungstag der Anmeldung: 06.01.2021
(73) Patentinhaber: VOLKSWAGEN AKTIENGESELLSCHAFT, 38440 Wolfsburg (DE)
(72) Erfinder: HEROLD, Stephan, 38106 Braunschweig (DE); SCHÜTZ, Daniel, 38165 Lehre/Essenrode (DE); FONDAHL, Kristin, 38106 Braunschweig (DE); RAATZ, Annika, 30966 Hemmingen (DE); IBRAHIM, Serhat, 30179 Hannover (DE); IBENTHAL, Julius, 31275 Lehrte (DE); BARTLING, Felix, 30916 Isernhagen (DE)
(74) Vertreter: Schmidt-Uhlig, Thomas
(86) Internationale Anmeldenummer: PCT/EP2019/054804
(87) Internationale Veröffentlichungsnummer: WO 2019/166464

(56) Entgegenhaltungen:
- EP-B1- 2 636 638
- DE-A1- 102006 009 432
- DE-A1- 3 930 981
- ELECTRIVE: "Volkswagen e-smartConnect Kuka Schnelllade-Roboter im Einsatz am E-Golf", 15 July 2015 (2015-07-15), XP093319821, Retrieved from the Internet <URL:https://www.youtube.com/watch?v=OjnRfCN-Ntw>
- CAR TV: "Volkswagen E-smart Connect", YOUTUBE, 14 July 2015 (2015-07-14), pages 1 pp., XP054976835, Retrieved from the Internet <URL:https://www.youtube.com/watch?v=-9VulKSy5uw> [retrieved on 20161012]
- ANONYMOUS: "Automated robot-based charging system for electric vehicles | SpringerLink", 28 April 2016 (2016-04-28), XP055589015, Retrieved from the Internet <URL:https://link.springer.com/chapter/10.1007/978-3-658-13255-2_70> [retrieved on 20190515]

## Beschreibung

Die vorliegende Erfindung betrifft eine Greifvorrichtung für einen Ladestecker für ein Kraftfahrzeug. Die Erfindung betrifft weiterhin einen Laderoboter mit einer solchen Greifvorrichtung.

Das automatisierte Einstecken von AC- und DC-Ladekabeln durch einen Roboter ist ein vielversprechendes Konzept, um automatisierte Parkfunktionen von Kraftfahrzeugen zu ergänzen und die Auslastung von Ladestationen für Kraftfahrzeuge zu erhöhen. Für das automatisierte Einstecken muss das AC- oder DC-Kabel vom Roboter am Griff des Kabels durch einen speziell auf den Griff angepassten Greifer gegriffen werden.

Vor diesem Hintergrund beschreibt die EP 2 636 638 B1 einen Stützarm für einen Ladestecker für ein Kraftfahrzeug. Der Stützarm besteht aus zwei Armabschnitten, die jeweils durch ein Parallelogrammgestänge gebildet werden. Die Armabschnitte sind durch eine Halterung miteinander verbunden. Am Ende des einen Armabschnitts ist mittels einer Halterung eine L-förmige Aufhängung für den Ladestecker befestigt. Die Aufhängung umfasst zwei Gabelabschnitte, zwischen die der Ladestecker eingebracht wird. Die Gabelabschnitte weisen jeweils eine Bohrung auf, in die zum Befestigen des Ladesteckers ein Bolzen geschoben wird. Die Aufhängung kann zudem eine Arretierung für den Ladestecker aufweisen.

DE 10 2006 009 432 A1 beschreibt eine Greifvorrichtung für eine Werkzeugwechselvorrichtung zum Greifen und Fixieren einer zu greifenden Werkzeugaufnahme in einer Greifaussparung. Die Greifvorrichtung hat einen ersten Greifabschnitt und einen zweiten drehbar gelagerten Greifabschnitt. Der zweite Greifabschnitt ist durch Kontakt mit der zu greifenden Werkzeugaufnahme infolge des Einfahrens der Werkzeugaufnahme in die Greifaussparung der Greifvorrichtung von einem geöffneten Zustand in einen geschlossenen Zustand bringbar.

Üblicherweise erfolgt das Greifen des Steckers bei aktuellen Systemen durch einen klassischen Zweifinger-Greifer mit einer speziell auf den Steckertyp abgestimmten Fingerkontur. Somit muss für jeden Steckertyp ein spezielles, aktives Greifwerkzeug entwickelt werden, bei dem die Greifbewegung durch einen zusätzlichen Aktor gesteuert wird. Zudem setzen, abhängig von der Einsatzregion, bestimmte Stecker eine zusätzliche Verriegelung und Entriegelung des Steckers durch eine Drucktaste voraus. Eine Automatisierung bedeutet hierbei zusätzlichen Aufwand seitens des Greifers oder seitens des Fahrzeugs.

Es ist eine Aufgabe der Erfindung, eine Greifvorrichtung für einen Ladestecker für ein Kraftfahrzeug bereitzustellen, bei der mit nur einem Werkzeug verschiedene Typen von Ladesteckern gegriffen werden können.

Diese Aufgabe wird durch eine Greifvorrichtung mit den Merkmalen des Anspruchs 1 gelöst. Bevorzugte Ausgestaltungen der Erfindung sind Gegenstand der abhängigen Ansprüche.

Erfindungsgemäß weist eine Greifvorrichtung für einen Ladestecker für ein Kraftfahrzeug ein offenes Gehäuse mit einer Innenkontur auf, wobei die Innenkontur in Form einer Negativkontur an eine Kontur eines Griffbereichs des Ladesteckers angepasst ist, und wobei das Gehäuse auf den Ladestecker aufschiebbar und durch Verkippung einrastbar ist..

Die beschriebene Lösung nutzt den Ansatz, dass eine Innenkontur eines Gehäuses der Greifvorrichtung an die Kontur des Griffbereichs des zu greifenden Ladesteckers angepasst ist. Die Innenkontur stellt somit eine Negativkontur der Kontur des Griffbereichs des Ladesteckers dar. Auf diese Weise kann eine breite Anzahl von Typen von Ladesteckern gegriffen werden, sofern diese zumindest im Griffbereich eine gemeinsame Kontur aufweisen. Bei Ladesteckern für Kraftfahrzeuge ist dies gegeben, da die Anbieter von Ladesteckern aus Gründen einer ökonomischen Produktion, aber auch in Hinblick auf einen Wiedererkennungswert, regelmäßig eine einheitliche Gestaltung der verschiedenen Ladesteckertypen nutzen. Mit nur einer einzigen, fertig eingerichteten Greifvorrichtung können somit üblicherweise alle Ladestecker eines Anbieters aufgenommen werden. Vorzugsweise ist die Greifvorrichtung zur Anpassung an die Ladestecker verschiedener Anbieter modular und justierbar ausgeführt, beispielsweise durch ein wechselbares Gehäuse.

Erfindungsgemäß ist die Innenkontur des Gehäuses an eine Kontur eines Griffbereichs des Ladesteckers angepasst. Die elektrischen Kontakte und somit der Steckbereich der Ladestecker unterscheiden sich oftmals je nach Einsatzregion und abhängig davon, ob mit Wechselstrom oder Gleichstrom geladen wird. Der Steckbereich kann daher systembedingt nicht immer mit einer einheitlichen Kontur ausgeführt werden. Der Griffbereich hingegen kann weitgehend unabhängig von der sonstigen Gestaltung des Ladesteckers gestaltet werden, so dass in diesem Bereich typischerweise eine einheitliche Kontur anzutreffen ist.

Gemäß einem Aspekt der Erfindung weist die Greifvorrichtung einen Verriegelungsmechanismus auf, der den Ladestecker im Gehäuse fixiert. Durch den Verriegelungsmechanismus lässt sich die Paarungssicherheit von Ladestecker und Greifvorrichtung erhöhen, da ein unbeabsichtigtes Lösen des Ladesteckers aus der Greifvorrichtung verhindert wird. Insbesondere beim Einstecken des Ladesteckers in eine Ladebuchse des Kraftfahrzeugs beziehungsweise beim Entfernen des Ladesteckers aus der Ladebuchse treten Kräfte auf, die ohne einen Verriegelungsmechanismus zu einem solchen unbeabsichtigten Lösen führen können.

Gemäß einem Aspekt der Erfindung greift der Verriegelungsmechanismus in eine Griffmulde des Ladesteckers ein. Aufgrund der Griffmulde weist der Griffbereich eine innere Rundung auf, die für den Verriegelungsmechanismus genutzt werden kann. Dazu greift ein Riegel des Verriegelungsmechanismus im geschlossenen Zustand in die Griffmulde und presst gegen die innere Rundung des Griffbereichs. Die Pressung kann über eine Feder erzeugt werden, die den Riegel in das Gehäuse drückt. Der Riegel kann um eine Achse rotieren und klappt beim Öffnen nach außen. Um den Ladestecker lösen zu können, muss dieser aus der Greifvorrichtung herausgekippt werden. Dazu muss gegen die Haltekraft des Riegels gearbeitet werden.

Gemäß einem Aspekt der Erfindung weist der Verriegelungsmechanismus einen verstellbaren Bolzen auf, der in einen Hohlraum des Griffbereichs einbringbar ist. Viele Ladestecker weisen zur Material- und Gewichtseinsparung einen Hohlgriff auf. Dieser Umstand lässt sich für einen aktiven Verriegelungsmechanismus nutzen, bei dem das Lösen und Verbinden des Ladesteckers ohne Kraftaufwand geschehen kann. Die feste Paarung wird durch einen Bolzen erreicht, der in den Hohlraum des Griffs fährt. Beim Bewegen des Bolzens werden nur sehr geringe Kräfte benötigt, da die Haltekräfte nicht von der Aktorik erzeugt werden, sondern durch die Struktur und Lagerung direkt in das Gehäuse geleitet werden. Im gesicherten Zustand, wenn der Bolzen in den Hohlraum eingefahren ist, kann die Aktorik somit abgeschaltet werden.

Gemäß einem Aspekt der Erfindung weist die Greifvorrichtung einen Entriegelungsmechanismus für ein Sicherungselement des Ladesteckers auf. Zum Teil weisen aktuelle Ladestecker ein Sicherungselement auf, das durch Betätigen einer Entriegelungstaste entriegelt werden muss. Ohne Entriegelung kann der Ladestecker nicht aus einer Ladebuchse eines Kraftfahrzeugs entfernt werden. Für die Automatisierung des Ladevorgangs ist es daher von Vorteil, wenn die Entriegelung durch die Greifvorrichtung vorgenommen werden kann, so dass kein manueller Eingriff erforderlich ist.

Gemäß einem Aspekt der Erfindung weist der Entriegelungsmechanismus einen Federmechanismus zur Betätigung des Sicherungselements auf. Durch die Verwendung eines Federmechanismus kann die Entriegelung ohne einen zusätzlichen Aktor erreicht werden. Allein durch das Aufnehmen des Ladesteckers durch die Greifvorrichtung wird das Sicherungselement entriegelt. Durch den Federmechanismus können dabei Höhenunterschiede der Ladestecker ausgeglichen und das Sicherungselement stets zuverlässig entriegelt werden. Beim Lösen der Greifvorrichtung vom Ladestecker nach dem Einstecken des Ladesteckers in eine Ladebuchse wird das Sicherungselement automatisch wieder verriegelt, so dass der Ladevorgang initiiert werden kann.

Gemäß einem Aspekt der Erfindung weist der Entriegelungsmechanismus einen Aktor zur Betätigung des Sicherungselements auf. Bei dieser Ausführungsform wird der Entriegelungsmechanismus durch einen zusätzlichen Aktor aktiv betätigt. Diese Lösung ist insbesondere dann vorteilhaft, wenn die Betätigung des Sicherungselements größere Kräfte erfordert.

Gemäß einem Aspekt der Erfindung weist das Gehäuse einen feststehenden Zapfen auf, dessen Kontur an eine Kontur eines Hohlraums eines Griffbereichs des Ladesteckers angepasst ist. Vorteil dieser Ausführungsform ist eine reduzierte Komplexität. Die Greifvorrichtung greift dabei nicht im eigentlichen Sinne, sondern wird von unten auf den Ladestecker aufgeschoben. Dieser reine Formschluss lässt dann außer in der Aufsteckrichtung keine weiteren Relativbewegungen zwischen der Greifvorrichtung und dem Ladestecker zu. Dies ist ausreichend, da beim Verbinden des Ladesteckers mit dem Fahrzeug die Steckrichtung nicht mit der Richtung übereinstimmt, mit der der Ladestecker mit der Greifvorrichtung verbunden ist.

Gemäß einem Aspekt der Erfindung weist die Greifvorrichtung einen Hebel zum Betätigen eines Sicherungselements des Ladesteckers auf. Dabei weist der Hebel vorzugsweise eine Krümmung auf, die an eine Form des Griffbereichs angepasst ist. Der Hebel ist so an der Greifvorrichtung angeordnet, dass er beim Einschieben des Ladesteckers in die Greifvorrichtung automatisch betätigt wird und das Sicherungselement entriegelt. Die Krümmung des Hebels verbessert den Kontaktwinkel relativ zu einem Griff des Ladesteckers. Vorzugsweise wird der Kontaktwinkel in jeder Position bei annähernd 45° gehalten. Dies reduziert zum einen die Reibung und sorgt zudem dafür, dass der Bewegungsbereich des Hebels erhöht wird.

Besonders vorteilhaft wird eine erfindungsgemäße Greifvorrichtung durch einen Laderoboter für ein Kraftfahrzeug genutzt. Ein solcher Laderoboter kann beispielsweise zum robotergestützen Verbinden von AC- und DC-Ladesteckern mit einem Elektrofahrzeug in einer automatisierten Elektrotankstelle oder in der Fertigung von Elektrofahrzeugen genutzt werden.

Weitere Merkmale der vorliegenden Erfindung werden aus der nachfolgenden Beschreibung und den angehängten Ansprüchen in Verbindung mit den Figuren ersichtlich.
- Fig. 1: zeigt eine erste Ausführungsform eines Ladesteckers für ein Kraftfahrzeug;
- Fig. 2: zeigt eine zweite Ausführungsform eines Ladesteckers für ein Kraftfahrzeug;
- Fig. 3: zeigt eine erste Ausführungsform einer Greifvorrichtung;
- Fig. 4: zeigt eine zweite Ausführungsform einer Greifvorrichtung;
- Fig. 5: illustriert einen Riegel eines Verriegelungsmechanismus der Greifvorrichtung aus Fig. 4;
- Fig. 6: zeigt eine dritte Ausführungsform einer Greifvorrichtung;
- Fig. 7: illustriert einen Bolzen eines Verriegelungsmechanismus der Greifvorrichtung aus Fig. 6;
- Fig. 8: zeigt ein erstes Beispiel eines Entriegelungsmechanismus für ein Sicherungselement eines Ladesteckers;
- Fig. 9: zeigt ein zweites Beispiel eines Entriegelungsmechanismus für ein Sicherungselement eines Ladesteckers;
- Fig. 10: zeigt ein drittes Beispiel eines Entriegelungsmechanismus für ein Sicherungselement eines Ladesteckers;
- Fig. 11: zeigt ein viertes Beispiel eines Entriegelungsmechanismus für ein Sicherungselement eines Ladesteckers;
- Fig. 12: zeigt ein fünftes Beispiel eines Entriegelungsmechanismus für ein Sicherungselement eines Ladesteckers;
- Fig. 13: zeigt eine vierte Ausführungsform einer Greifvorrichtung; und
- Fig. 14: illustriert einen Entriegelungsmechanismus der Greifvorrichtung aus Fig. 13.

Zum besseren Verständnis der Prinzipien der vorliegenden Erfindung werden nachfolgend Ausführungsformen der Erfindung anhand der Figuren am Beispiel eines Ladesteckers für ein Kraftfahrzeug detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

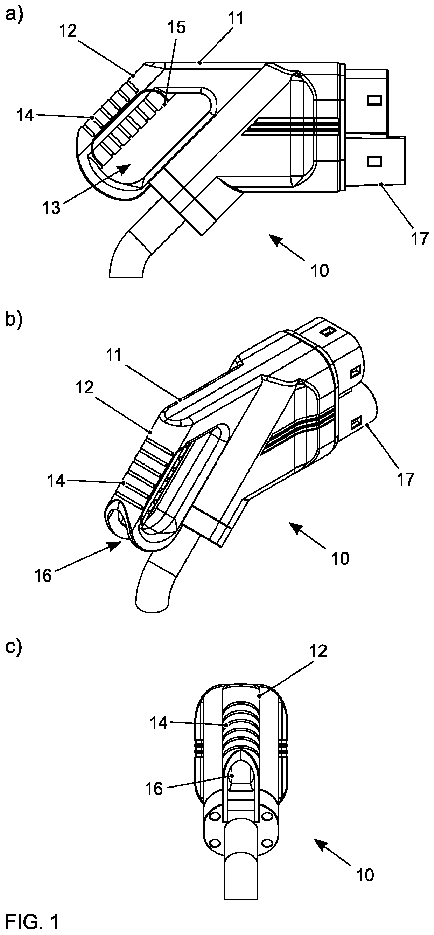

Fig. 1 zeigt eine erste Ausführungsform eines Ladesteckers 10 für ein Kraftfahrzeug. Dabei zeigt Teilbild a) eine Seitenansicht, Teilbild b) eine Ansicht von schräg oben und Teilbild c) eine Rückansicht. Der abgebildete Ladestecker 10 der Firma PHOENIX CONTACT weist einen Griff 11 mit einem Griffbereich 12 auf. Da der Ladestecker 10 für eine Bedienung per Hand vorgesehen ist, hat der Griff 11 eine Griffmulde 13, in die der Benutzer mit einer Hand eingreifen kann. Der Griffbereich 12 hat eine ausgeprägte Griffkontur 14 und eine gerundete Form, so dass der Griffbereich 12 angrenzend zur Griffmulde 13 eine innere Rundung 15 aufweist. Der Griffbereich 12 umschließt einen nach hinten offenen Hohlraum 16. Am vorderen Ende des Ladesteckers 10 sind elektrische Steckkontakte 17 angeordnet, die je nach Art des Ladestroms und Einsatzregion des Ladesteckers 10 unterschiedlich ausgeführt sein können. Die Ausführung des Griffbereichs 12 ist unabhängig von der Ausführung der elektrischen Steckkontakte 17 identisch.

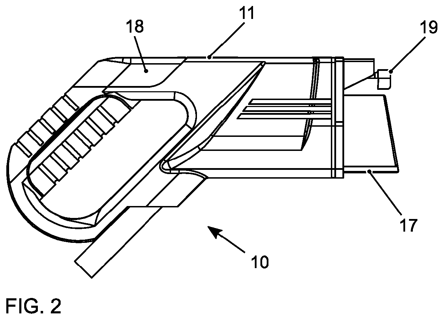

Fig. 2 zeigt eine zweite Ausführungsform eines Ladesteckers 10 für ein Kraftfahrzeug. Dargestellt ist lediglich eine Seitenansicht. Der Griff 11 des Ladesteckers 10 ist weitgehend baugleich mit dem Ladestecker 10 aus Fig. 1. Allerdings weist der Griff 11 in seinem oberen Bereich eine Entriegelungstaste 18 für ein Sicherungselement 19 des Ladesteckers 10 auf. Zudem sind die elektrischen Steckkontakte 17 sowie das Gehäuse des Ladesteckers 10 im Bereich der elektrischen Steckkontakte 17 abweichend ausgeführt.

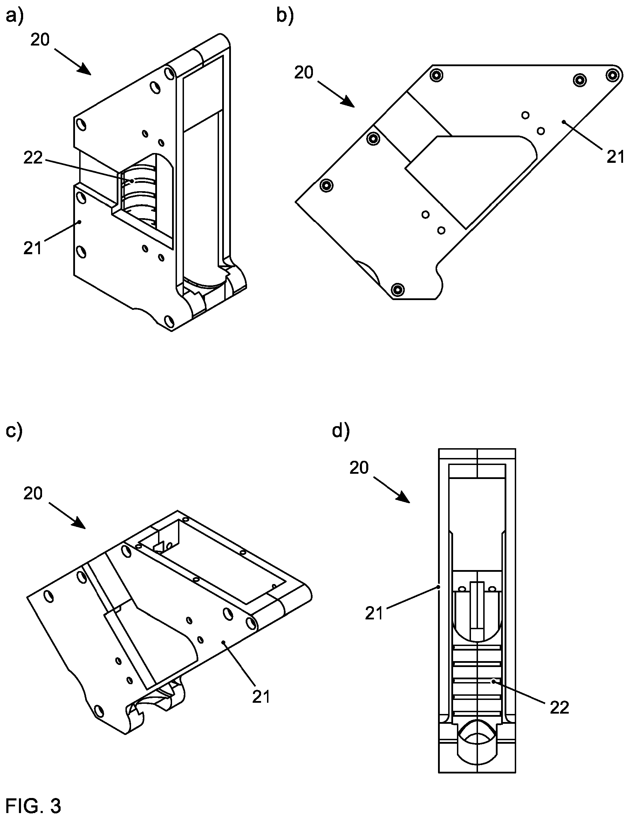

Fig. 3 zeigt eine erste Ausführungsform einer Greifvorrichtung 20 für die Ladestecker aus Fig. 1 und Fig. 2. Dabei zeigt Teilbild a) eine Ansicht von schräg unten, Teilbild b) eine Seitenansicht, Teilbild c) eine Ansicht von schräg oben und Teilbild d) eine Ansicht von unten. Bei dieser Ausführungsform wird der Griffbereich des Ladesteckers von der Greifvorrichtung 20 umschlossen. Die Innenkontur 22 des Gehäuses 21 der Greifvorrichtung 20 ist ein Negativabdruck der Griffkontur des Ladesteckers. Das Gehäuse 21 lässt sich von hinten auf den Ladestecker aufschieben und rastet durch Verkippung ein. Die Innenkontur 22 des Gehäuses 21 und die Griffkontur des Ladesteckers greifen ineinander. Die Elastizität des Griffmaterials im Griffbereich ermöglicht das Einrasten wie bei einem Schnappmechanismus. Die Paarung wird dabei hauptsächlich durch Formschluss erzeugt. Diese Ausführungsform ermöglicht eine passive Auslegung der Greifvorrichtung 20 und benötigt keine weiteren Aktoren außer der des greifenden Roboters. Zur Feinjustierung kann das Gehäuse 21 zweigeteilt gefertigt sein, sodass sich durch die Wahl der richtigen Passscheibe der Sitz optimal einstellen lässt.

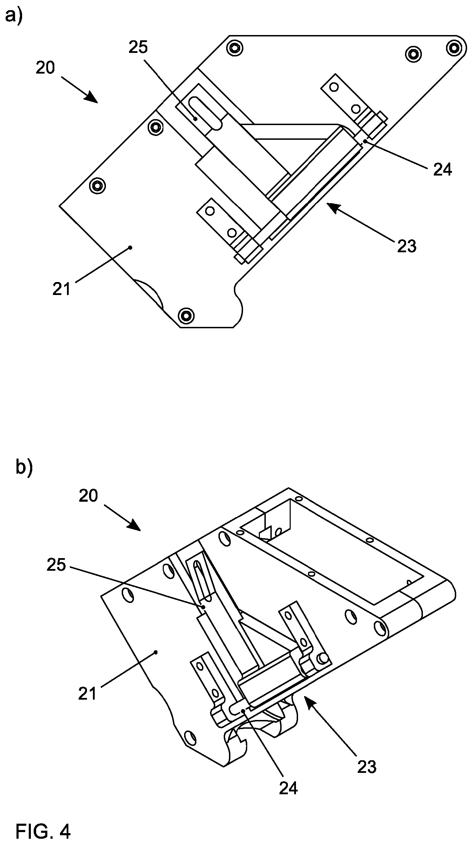

Nachfolgend sollen einige bevorzugte Ausführungsformen der Erfindung anhand der Figuren 4 bis 14 erläutert werden.

Fig. 4 zeigt eine zweite Ausführungsform einer Greifvorrichtung 20 für die Ladestecker aus Fig. 1 und Fig. 2. Dabei zeigt Teilbild a) eine Seitenansicht und Teilbild b) eine Ansicht von schräg oben. Die Greifvorrichtung 20 ist in weiten Teilen identisch mit der Greifvorrichtung 20 aus Fig. 3. Um die Paarungssicherheit von Ladestecker und Greifvorrichtung 20 zu erhöhen, weist die Greifvorrichtung 20 allerdings einen passiven Verriegelungsmechanismus 23 auf. Der Verriegelungsmechanismus 23 beinhaltet einen auf einer Achse 24 angeordneten Riegel 25. Der Riegel 25 greift im geschlossenen Zustand in die Griffmulde des Ladesteckers und presst gegen die innere Rundung des Griffbereichs. Die Pressung wird über eine auf der Achse 24 angeordnete Spiralfeder (nicht gezeigt) erzeugt, die den Riegel 25 in das Gehäuse 21 drückt. Der Riegel 25 kann um die Achse 24 rotieren und klappt beim Öffnen nach außen. Um den Ladestecker lösen zu können, muss dieser aus der Greifvorrichtung 20 herausgekippt werden. Dazu muss gegen die Haltekraft des Riegels 25 gearbeitet werden. Um Ladestecker und Greifvorrichtung 20 zu verbinden, wird die Greifvorrichtung 20 von hinten auf den Griff des Ladesteckers aufgeschoben. Damit sich der Griff einfach in das Gehäuse 21 schieben lässt, ist eine Kontaktfläche des Riegels 25 schräg geformt.

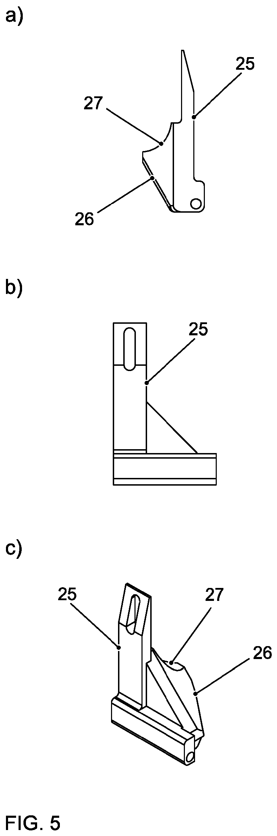

Fig. 5 illustriert den Riegel 25 des Verriegelungsmechanismus der Greifvorrichtung aus Fig. 4. Dabei zeigt Teilbild a) eine Ansicht entlang der Achse, Teilbild b) eine Seitenansicht und Teilbild c) eine Ansicht von schräg oben. In Teilbild a) und Teilbild c) gut zu erkennen ist ein Anpresselement 26, das im geschlossenen Zustand gegen die innere Rundung des Griffbereichs des Ladesteckers presst. Ebenfalls gut zu sehen ist eine schräg geformte Kontaktfläche 27 des Anpresselements 26, die dafür sorgt, dass der Griff einfach in das Gehäuse geschoben werden kann.

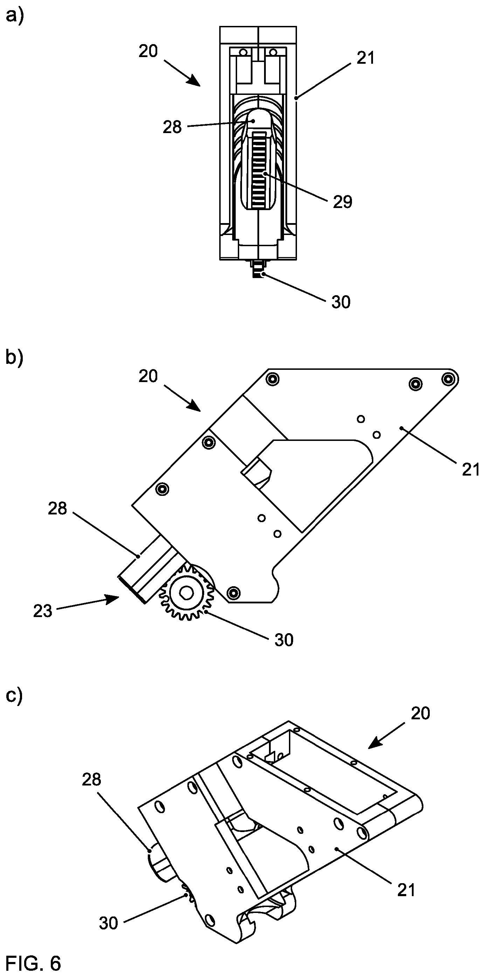

Fig. 6 zeigt eine dritte Ausführungsform einer Greifvorrichtung 20 für die Ladestecker aus Fig. 1 und Fig. 2. Dabei zeigt Teilbild a) eine Ansicht von unten, Teilbild b) eine Seitenansicht und Teilbild c) eine Ansicht von schräg oben. Bei dieser Ausführungsform wird ein aktiver Verriegelungsmechanismus 23 genutzt, damit das Lösen und Verbinden des Ladesteckers ohne Kraftaufwand geschehen kann. Gehäuse 21 und Ladestecker können in diesem Fall leichtes Spiel aufweisen. Zum Greifen wird das Gehäuse 21 von hinten auf den Griff des Ladesteckers geschoben. Die feste Paarung wird durch einen Bolzen 28 erreicht, der von unten in den Hohlraum des Griffs fährt. Der Bolzen 28 wird im Gehäuse 21 gelagert und ist über eine Kinematik linear beweglich. Im Beispiel umfasst die Kinematik eine in den Bolzen 28 eingelassene Zahnstange 29 und ein angetriebenes Zahnrad 30. Es werden nur sehr geringe Kräfte beim Bewegen des Bolzens 28 benötigt, da die Haltekräfte nicht von der Aktorik erzeugt werden, sondern durch die Struktur und Lagerung direkt in das Gehäuse 21 geleitet werden. Im gesicherten Zustand, wenn der Bolzen 28 in den Hohlraum eingefahren ist, kann die Aktorik somit abgeschaltet werden.

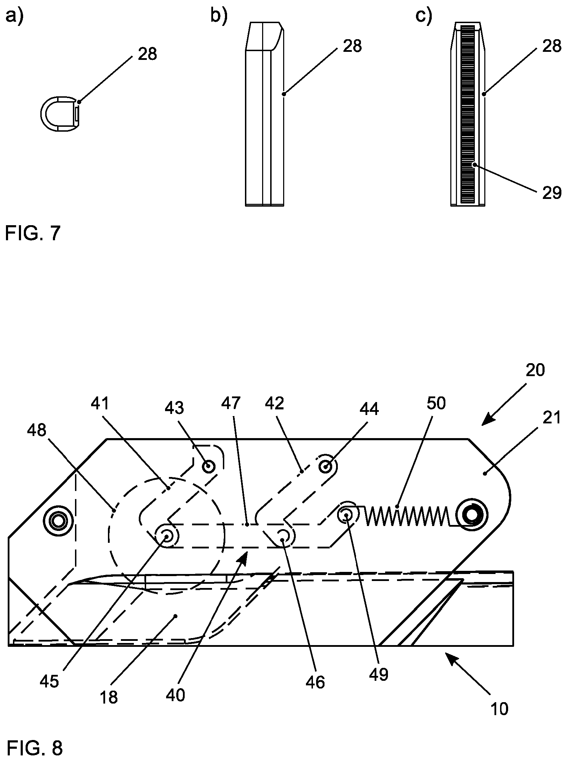

Fig. 7 illustriert den Bolzen 28 des Verriegelungsmechanismus der Greifvorrichtung aus Fig. 6. Dabei zeigt Teilbild a) eine Frontansicht, Teilbild b) eine Seitenansicht und Teilbild c) eine Ansicht von unten. Gut zu erkennen ist die in die Unterseite des Bolzens 28 eingelassene Zahnstange 29, die ein Verschieben des Bolzens 28 in der Greifvorrichtung durch das angetriebene Zahnrad ermöglicht.

Der Ladestecker aus Fig. 2 weist ein Sicherungselement auf, das durch Betätigen der Entriegelungstaste entriegelt werden muss. Nachfolgend sollen dazu eine Reihe von Entriegelungsmechanismen vorgestellt werden. Die Entriegelungsmechanismen sind kompatibel mit allen oben beschriebenen Greifvorrichtungen.

Fig. 8 zeigt ein erstes Beispiel eines Entriegelungsmechanismus 40 für ein Sicherungselement des Ladesteckers 10. Diese Variante des Entriegelungsmechanismus 40 nutzt ein innerhalb der Greifvorrichtung 20 eingebrachtes federgestütztes System, welches Höhenunterschiede der Ladestecker 10 ausgleichen kann, um die Sicherungselemente der Ladestecker 10 zuverlässig zu entriegeln. Das federgestützte System besteht aus zwei parallel ausgerichteten Schenkeln 41, 42, deren obere Enden jeweils über Achsen 43, 44 mit dem Gehäuse 21 verbunden sind. Die unteren Enden sind jeweils über Achsen 45, 46 mit einem Steg 47 verbunden. Dieser ist zudem über die Achse 45 und den Schenkel 41 mit einem Rad 48 ausgestattet, welches sich vertikal oberhalb der Entriegelungstaste 18 befindet. Am rechten Ende des Stegs 47 befindet sich eine weitere Achse 49, welche eine Zugfeder 50 an den Steg 47 koppelt. Die Zugfeder 50 ist am anderen Ende mit dem Gehäuse 21 der Greifvorrichtung 20 verbunden. Die Zugrichtung der Feder 50 lässt die Schenkel 41, 42 so um ihre Achsen 43, 44 rotieren, dass deren Enden den Steg 47 in Richtung des Ladesteckers 10 und somit das Rad 48 auf die Entriegelungstaste 18 drücken.

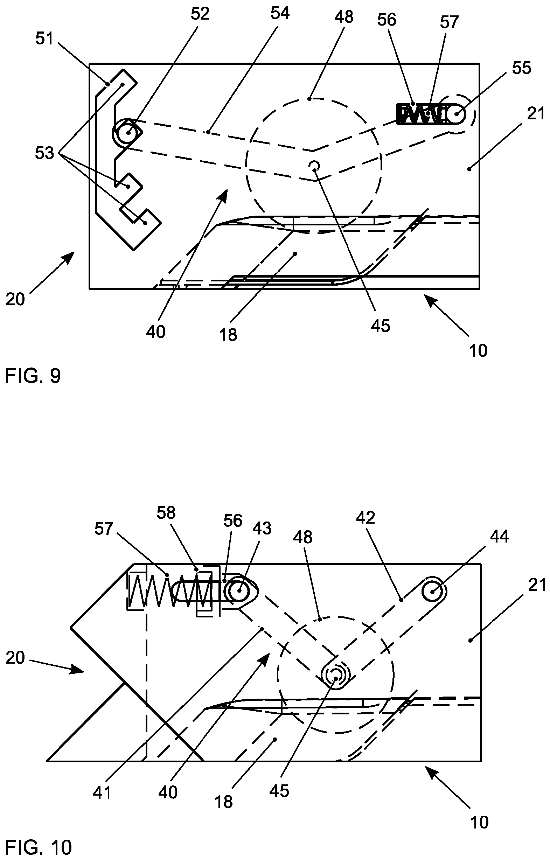

Fig. 9 zeigt ein zweites Beispiel eines Entriegelungsmechanismus 40 für ein Sicherungselement des Ladesteckers 10. Diese Variante des Entriegelungsmechanismus 40 ist starr ausgeführt, jedoch kann der Roboter den Mechanismus für die Entriegelung selbstständig konfigurieren und diesen so auf unterschiedliche Ladestecker 10 einstellen. Der Mechanismus besteht aus einer in die Wand des Gehäuses 21 eingebrachten Kontur 51, welche als Führung für einen Stift 52 dient und für verschiedene Ladestecker 10 entsprechende Rastpositionen 53 besitzt. Der Stift 52 ist am linken Ende einer Schwinge 54 befestigt und ragt aus dem Gehäuse 21 so weit hervor, dass der Roboterarm diesen mit Hilfe eines Gegenlagers bewegen kann. In der Mitte der Schwinge 54 sitzt auf einer Achse 45 frei drehend ein Rad 48, welches mittig über der Entriegelungstaste 18 des Ladesteckers 10 positioniert ist. Am rechten Ende der Schwinge 54 ist ein weiterer Stift 55 eingebracht, welcher in einer Aussparung 56 horizontal geführt wird. Dies ermöglicht die horizontale Bewegung des linken Stifts 52 in der Kontur 51. Um ein ungewolltes Entgleiten des Stifts 52 zu verhindern, ist in der Aussparung 56 zudem eine Druckfeder 57 eingebracht, welche die Schwinge 54 in einer der Rastpositionen 53 fixiert. In diesen Rastpositionen 53 ist der Abstand des Griffs zu dem Punkt der vollständigen Entriegelung des Sicherungselements den jeweiligen Ladesteckern 10 angepasst, wodurch diese beim Greifen durch den Roboter automatisch durch dauerhafte Betätigung entriegelt werden.

Fig. 10 zeigt ein drittes Beispiel eines Entriegelungsmechanismus 40 für ein Sicherungselement des Ladesteckers 10. Diese Variante des Entriegelungsmechanismus 40 nutzt ein innerhalb der Greifvorrichtung 20 eingebrachtes federgestütztes System, welches Höhenunterschiede der Ladestecker 10 ausgleichen kann, um die Sicherungselemente der Ladestecker 10 zuverlässig zu entriegeln. Das federgestützte System besteht aus zwei Schenkeln 41, 42, welche am unteren Ende über eine Achse 45 miteinander verbunden sind. Auf dieser Achse 45 ist zudem ein Rad 48 gelagert. Der rechte Schenkel 42 ist am oberen Ende über eine weitere Achse 44 an das Gehäuse 21 gekoppelt. Der linke Schenkel 42 ist am oberen Ende über eine Achse 43 mit einer Federhülse 58 verbunden, in der das rechte Ende einer Druckfeder 57 liegt. Die Achse 43 wird zudem durch horizontale Aussparungen 56 im Gehäuse 21 geführt. Die Feder 57, deren anderes Ende im Gehäuse 21 liegt, drückt das obere Ende des linken Schenkels 41 von der Gehäusewand in Richtung des anderen Schenkels 42. Durch diese Scherenbewegung wird die untere Achse 45 und somit das Rad 48, welches oberhalb der Entriegelungstaste 18 liegt, auf die Entriegelungstaste 18 gedrückt, wodurch diese betätigt wird.

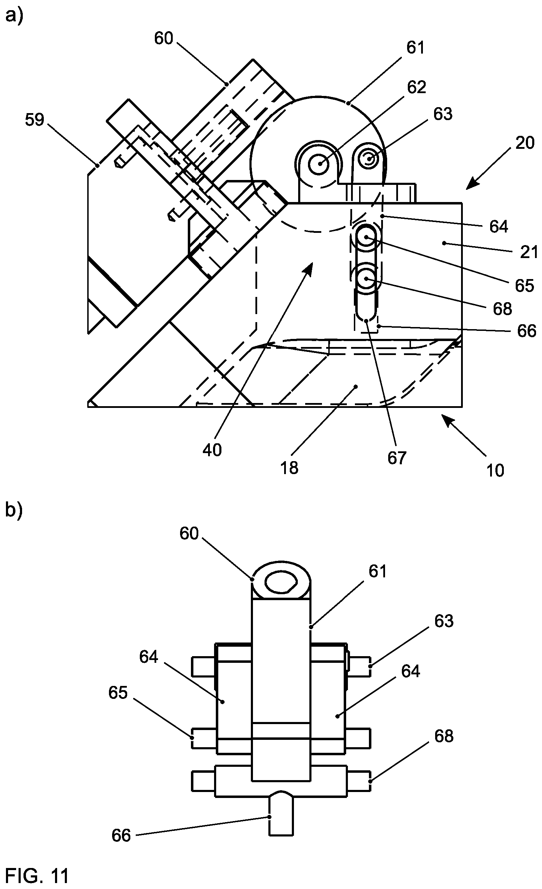

Fig. 11 zeigt ein viertes Beispiel eines Entriegelungsmechanismus 40 für ein Sicherungselement des Ladesteckers 10. Diese Variante des Entriegelungsmechanismus 40 nutzt einen Aktor 59, auf dessen Welle ein Schneckenrad 60 sitzt, welches ein Globoidrad 61 antreibt. Dieses Globoidrad 61 ist auf einer Achse 62 frei drehend am Gehäuse 21 gelagert und ist seitlich mit einer Bohrung versehen, durch die eine Achse 63 gesteckt wird. Diese koppelt ein Paar Schenkel 64 an deren oberen Enden mit dem Globoidrad 61. Die unteren Enden sind über eine weitere Achse 65 mit einem Stößel 66 gekoppelt. Für die Gewährleistung der vertikalen Führung wird der Stößel 66 zusammen mit der Achse 65 in einem vertikalen Langloch 67 in der Gehäusewand geführt. Hierfür ist der Stößel 66 in Form einer Achse 68 parallel zu der Achse 65 ausgeformt. Wird das Globoidrad 61 über die Aktorik betrieben, so transformieren die Schenkel 64 die rotatorische Bewegung in eine lineare Bewegung. Diese bewegt den Stößel 66 in Richtung der Entriegelungstaste 18 des Ladesteckers 10 und entriegelt bzw. verriegelt das Sicherungselement. Teilbild a) zeigt eine Seitenansicht. Teilbild b) zeigt eine Frontansicht auf das Schneckenrad 60, das Globoidrad 61 und den Stößel 66 mitsamt der Achsen 63, 65, 68 und der Schenkel 64.

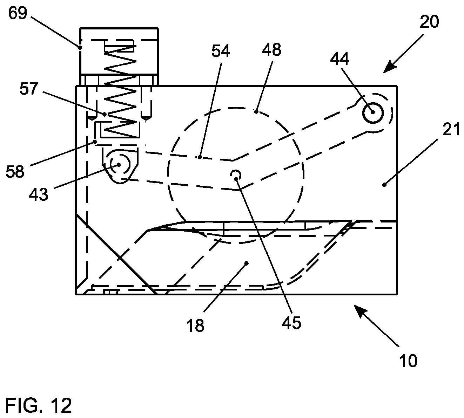

Fig. 12 zeigt ein fünftes Beispiel eines Entriegelungsmechanismus für ein Sicherungselement des Ladesteckers 10. Diese Variante des Entriegelungsmechanismus 40 nutzt ein innerhalb der Greifvorrichtung 20 eingebrachtes federgestütztes System, welches Höhenunterschiede der Ladestecker 10 ausgleichen kann, um die Sicherungselemente der Ladestecker 10 zuverlässig zu entriegeln. Das federgestützte System besteht aus einer Schwinge 54, welche am rechten Ende mit einer Achse 44 an das Gehäuse 21 gekoppelt ist. In der Mitte der Schwinge 54 ist über eine Achse 45 ein Rad 48 frei drehend oberhalb der Entriegelungstaste 18 des Ladesteckers gelagert. Das andere Ende der Schwinge ist über eine Achse 43 mit einer kurzen Federhülse 58 verbunden, in der eine vertikal ausgerichtete Druckfeder 57 liegt. Das obere Ende der Feder 57 liegt in einem Gegenlager 69, welches mit dem Gehäuse 21 verbunden ist. Die Feder 57 drückt über die Federhülse 58 die Schwinge 54 dem Ladestecker 10 entgegen und somit das Rad 48 gegen dessen Entriegelungstaste 18, wodurch diese betätigt wird.

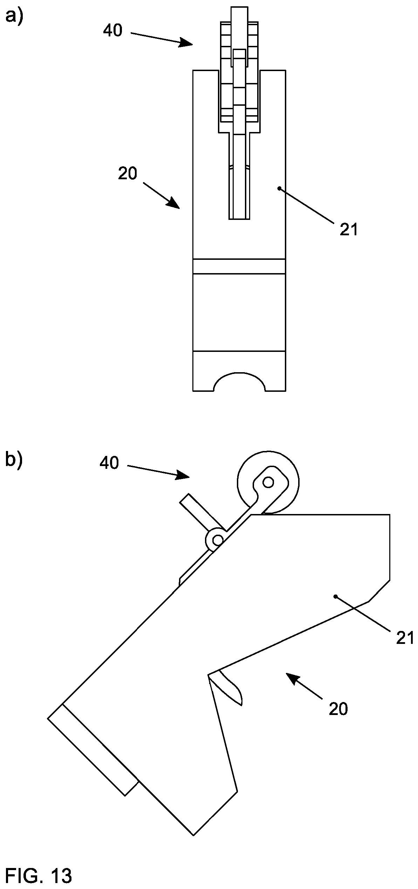

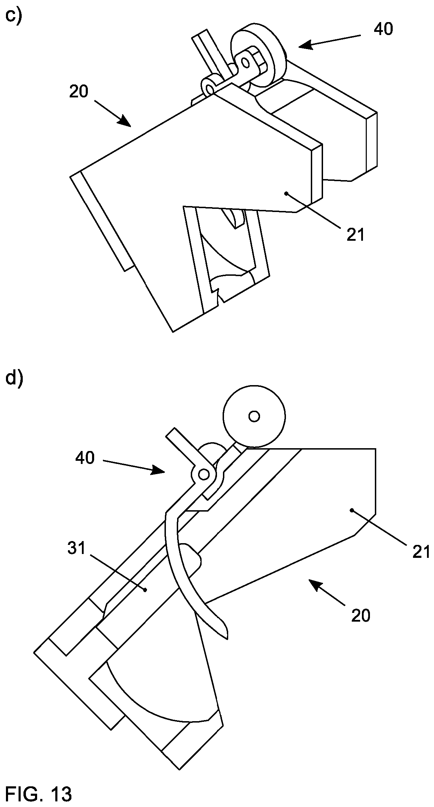

Fig. 13 zeigt eine vierte Ausführungsform einer Greifvorrichtung 20 für die Ladestecker aus Fig. 1 und Fig. 2. Diese nutzt einen anderen Greifmechanismus. Teilbild a) zeigt eine Ansicht von oben, Teilbild b) eine Seitenansicht, Teilbild c) eine Ansicht von schräg oben und Teilbild d) einen Schnitt durch die Greifvorrichtung 20. Indem die Greifvorrichtung 20 nicht im eigentlichen Sinne greift, sondern aufgesteckt wird, lässt sich die Komplexität weiter reduzieren. Das Gehäuse 21 ist als Negativkontur an den unteren Teil des Ladesteckers angepasst. Das Gehäuse 21 besitzt im Inneren einen feststehenden Zapfen 31, der an die Innenkontur des Hohlraums des Griffbereichs angepasst ist. Die Greifvorrichtung 20 lässt sich daher von unten auf den Ladestecker aufschieben. Dieser reine Formschluss lässt dann außer in der Aufsteckrichtung keine weiteren Relativbewegungen zwischen der Greifvorrichtung 20 und dem Ladestecker zu. Dies ist ausreichend, da beim Verbinden des Ladesteckers mit dem Fahrzeug die Steckrichtung nicht mit der Richtung übereinstimmt, mit der der Ladestecker mit der Greifvorrichtung 20 verbunden ist. Die Position des feststehenden Zapfens 31 lässt sich vorzugsweise einstellen, um ein optimales Spiel zwischen Greifvorrichtung 20 und Ladestecker zu erzielen. Die Greifvorrichtung 20 weist einen Entriegelungsmechanismus 40 auf, dessen Funktionsweise nachfolgend beschrieben wird.

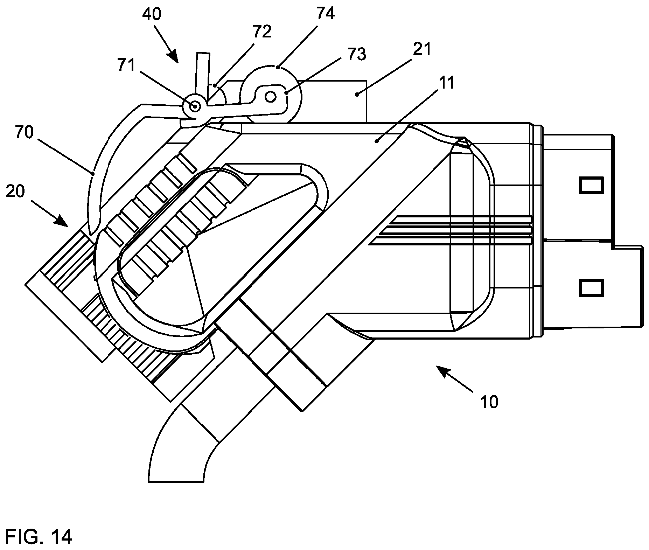

Fig. 14 illustriert die Funktionsweise des Entriegelungsmechanismus 40 der Greifvorrichtung 20 aus Fig. 13, die ein verändertes Entriegelungskonzept nutzt. Wird der Ladestecker 10 in die Greifvorrichtung 20 geschoben, so betätigt dieser einen Hebel 70, der mit einer Achse 71 an das Gehäuse 21 gekoppelt ist. Die Krümmung des Hebels 70 verbessert den Kontaktwinkel relativ zum Griff 11, der vorzugsweise in jeder Position bei annähernd 45° gehalten wird. Dies reduziert zum einen die Reibung und sorgt zudem dafür, dass der Bewegungsbereich des Hebels 70 erhöht wird. Es wird so eine größere Rotation um die Achse 71 erreicht. Der Hebel 70 ist mit einer Feder 72 mit einer Halterung 73 eines Rades 74 verbunden. Sobald der Hebel 70 durch den Ladestecker 10 aus dem Gehäuse 21 herausgedrückt wird, spannt dieser die Feder 72 und das Rad 74 möchte einklappen. Das Rad 74 wird jedoch von dem Griff 11 des Ladesteckers 10 gestoppt. Erst wenn der Ladestecker 10 vollständig in das Gehäuse 21 geschoben ist, kann das Rad 74 einklappen. Im eingeklappten Zustand drückt das Rad 74 auf die Entriegelungstaste des Ladesteckers 10 und das Sicherungselement wird entriegelt. Dieser Mechanismus betätigt dabei nicht nur die Entriegelungstaste, sondern fixiert gleichzeitig den Ladestecker 10 im Gehäuse 21. Zum Öffnen muss gegen die Feder 72 gearbeitet werden, um das Rad 74 aus dem Gehäuse 21 heraus zu schieben.

### Bezugszeichenliste

- 10: Ladestecker
- 11: Griff
- 12: Griffbereich
- 13: Griffmulde
- 14: Griffkontur
- 15: innere Rundung
- 16: Hohlraum
- 17: elektrische Steckkontakte
- 18: Entriegelungstaste
- 19: Sicherungselement
- 20: Greifvorrichtung
- 21: Gehäuse
- 22: Innenkontur
- 23: Verriegelungsmechanismus
- 24: Achse
- 25: Riegel
- 26: Anpresselement
- 27: Kontaktfläche
- 28: Bolzen
- 29: Zahnstange
- 30: Zahnrad
- 31: Zapfen
- 40: Entriegelungsmechanismus
- 41, 42: Schenkel
- 43-46: Achse
- 47: Steg
- 48: Rad
- 49: Achse
- 50: Zugfeder
- 51: Kontur
- 52: Stift
- 53: Rastpositionen
- 54: Schwinge
- 55: Stift
- 56: Aussparung
- 57: Druckfeder
- 58: Federhülse
- 59: Aktor
- 60: Schneckenrad
- 61: Globoidrad
- 62, 63: Achse
- 64: Schenkel
- 65: Achse
- 66: Stößel
- 67: Langloch
- 68: Achse
- 69: Gegenlager
- 70: Hebel
- 71: Achse
- 72: Feder
- 73: Halterung
- 74: Rad

## Patentansprüche

1. Greifvorrichtung (20) für einen Ladestecker (10) für ein Kraftfahrzeug, wobei die Greifvorrichtung (20) ein offenes Gehäuse (21) mit einer Innenkontur (22) aufweist, wobei die Innenkontur (22) in Form einer Negativkontur an eine Kontur eines Griffbereichs (12) des Ladesteckers (10) angepasst ist, und dadurchg gekennzeichnet, dass das Gehäuse (21) auf den Ladestecker (10) aufschiebbar und durch Verkippung einrastbar ist.

2. Greifvorrichtung (20) gemäß Anspruch 1, wobei die Greifvorrichtung (20) einen Verriegelungsmechanismus (23) aufweist, der den Ladestecker (10) im Gehäuse (21) fixiert.

3. Greifvorrichtung (20) gemäß Anspruch 2, wobei der Verriegelungsmechanismus (23) in eine Griffmulde (13) des Ladesteckers eingreift.

4. Greifvorrichtung (20) gemäß Anspruch 2, wobei der Verriegelungsmechanismus (23) einen verstellbaren Bolzen (28) aufweist, der in einen Hohlraum (16) des Griffbereichs (12) einbringbar ist.

5. Greifvorrichtung (20) gemäß einem der vorherigen Ansprüche, wobei die Greifvorrichtung (20) einen Entriegelungsmechanismus (40) für ein Sicherungselement (19) des Ladesteckers (10) aufweist.

6. Greifvorrichtung (20) gemäß Anspruch 5, wobei der Entriegelungsmechanismus (40) einen Federmechanismus zur Betätigung des Sicherungselements (19) aufweist.

7. Greifvorrichtung (20) gemäß Anspruch 5, wobei der Entriegelungsmechanismus (31) einen Aktor (59) zur Betätigung des Sicherungselements (19) aufweist.

8. Greifvorrichtung (20) gemäß Anspruch 1, wobei das Gehäuse (21) einen feststehenden Zapfen (31) aufweist, dessen Kontur an eine Kontur eines Hohlraums (16) eines Griffbereichs (12) des Ladesteckers (10) angepasst ist.

9. Greifvorrichtung (20) gemäß Anspruch 8, wobei die Greifvorrichtung (20) einen Hebel (70) zum Betätigen eines Sicherungselements (19) des Ladesteckers aufweist.

10. Greifvorrichtung (20) gemäß Anspruch 9, wobei der Hebel (70) eine Krümmung aufweist, die an eine Form des Griffbereichs (12) angepasst ist.

11. Laderoboter für ein Kraftfahrzeug, **dadurch gekennzeichnet, dass** der Laderoboter eine Greifvorrichtung (20) gemäß einem der vorherigen Ansprüche für einen Ladestecker (10) aufweist.

## Claims

1. Gripping device (20) for a charging plug (10) for a motor vehicle, the gripping device (20) having an open housing (21) with an inner contour (22), the inner contour (22) in the form of a negative contour being adapted to a contour of a gripping area (12) of the charging plug (10), **characterized in that** the housing (21) can be pushed onto the charging plug (10) and can be latched in place by tilting.

2. Gripping device (20) according to Claim 1, wherein the gripping device (20) has a locking mechanism (23) which fixes the charging plug (10) in the housing (21).

3. Gripping device (20) according to Claim 2, wherein the locking mechanism (23) engages in a recessed grip (13) in the charging plug.

4. Gripping device (20) according to Claim 2, wherein the locking mechanism (23) has an adjustable bolt (28) which can be introduced into a cavity (16) of the gripping area (12).

5. Gripping device (20) according to any one of the preceding claims, wherein the gripping device (20) has a release mechanism (40) for a securing element (19) of the charging plug (10).

6. Gripping device (20) according to Claim 5, wherein the release mechanism (40) has a spring mechanism for actuating the securing element (19).

7. Gripping device (20) according to Claim 5, wherein the release mechanism (31) has an actuator (59) for actuating the securing element (19).

8. Gripping device (20) according to Claim 1, wherein the housing (21) has a fixed pin (31), the contour of which is adapted to a contour of a cavity (16) of a gripping area (12) of the charging plug (10).

9. Gripping device (20) according to Claim 8, wherein the gripping device (20) has a lever (70) for actuating a securing element (19) of the charging plug.

10. Gripping device (20) according to Claim 9, wherein the lever (70) has a curvature which is adapted to a shape of the gripping area (12).

11. Charging robot for a motor vehicle, **characterized in that** the charging robot has a gripping device (20) according to any one of the preceding claims for a charging plug (10).

## Revendications

1. Dispositif de préhension (20) pour une fiche de charge (10) pour un véhicule automobile, le dispositif de préhension (20) possédant un boîtier (21) ouvert avec un contour intérieur (22), le contour intérieur (22) étant adapté sous la forme d'un contour négatif à un contour d'une zone de préhension (12) de la fiche de charge (10), et **caractérisé en ce que** le boîtier (21) peut être coulissé sur la fiche de charge (10) et peut être enclenché par basculement.

2. Dispositif de préhension (20) selon la revendication 1, le dispositif de préhension (20) possédant un mécanisme de verrouillage (23) qui cale la fiche de charge (10) dans le boîtier (21).

3. Dispositif de préhension (20) selon la revendication 2, le mécanisme de verrouillage (23) venant en prise dans une poignée encastrée (13) de la fiche de charge.

4. Dispositif de préhension (20) selon la revendication 2, le mécanisme de verrouillage (23) possédant un boulon réglable (28) qui peut être inséré dans une cavité (16) de la zone de préhension (12).

5. Dispositif de préhension (20) selon l'une des revendications précédentes, le dispositif de préhension (20) possédant un mécanisme de déverrouillage (40) pour un élément de sécurité (19) de la fiche de charge (10).

6. Dispositif de préhension (20) selon la revendication 5, le mécanisme de déverrouillage (40) possédant un mécanisme à ressort destiné à actionner l'élément de sécurité (19).

7. Dispositif de préhension (20) selon la revendication 5, le mécanisme de déverrouillage (31) possédant un actionneur (59) destiné à actionner l'élément de sécurité (19).

8. Dispositif de préhension (20) selon la revendication 1, le boîtier (21) possédant un tenon fixe (31) dont le contour est adapté à un contour d'une cavité (16) d'une zone de préhension (12) de la fiche de charge (10).

9. Dispositif de préhension (20) selon la revendication 8, le dispositif de préhension (20) possédant un levier (70) destiné à actionner un élément de sécurité (19) de la fiche de charge.

10. Dispositif de préhension (20) selon la revendication 9, le levier (70) présentant une courbure qui est adaptée à une forme de la zone de préhension (12).

11. Robot de charge pour un véhicule automobile, **caractérisé en ce que** le robot de charge possède un dispositif de préhension (20) selon l'une des revendications précédentes pour une fiche de charge (10).
